# EUROPÄISCHE PATENTSCHRIFT

(11) **EP 2 979 057 B1**
(45) Veröffentlichungstag und Bekanntmachung des Hinweises auf die Patenterteilung: **11.09.2019**
(21) Anmeldenummer: 14711236.1
(22) Anmeldetag: 18.03.2014
(51) Int. Cl.: G01B 11/16, G01D 5/353, G02B 6/02

(54) **FASEROPTISCHER SENSOR UND DESSEN VERWENDUNG**
FIBRE-OPTIC SENSOR AND USE THEREOF
CAPTEUR À FIBRE OPTIQUE ET SON UTILISATION

(30) Priorität: 25.03.2013 DE 102013205205
(43) Veröffentlichungstag der Anmeldung: 03.02.2016
(73) Patentinhaber: Fraunhofer-Gesellschaft zur Förderung der angewandten Forschung e.V., 80686 München (DE)
(72) Erfinder: SCHADE, Wolfgang, 38644 Goslar (DE); BURGMEIER, Jörg, 37520 Osterode (DE)
(74) Vertreter: Friese Goeden Patentanwälte PartGmbB
(86) Internationale Anmeldenummer: PCT/EP2014/055389
(87) Internationale Veröffentlichungsnummer: WO 2014/154528

(56) Entgegenhaltungen:
- EP-A2- 0 250 194
- US-A- 5 563 967
- US-A1- 2007 297 712

## Beschreibung

Die Erfindung betrifft einen faseroptischen Sensor mit einem Lichtwellenleiter, welcher zumindest einen ersten Kern und einen den ersten Kern umgebenden Mantel aufweist, wobei der erste Kern sich im Wesentlichen über die gesamte Länge des Lichtwellenleiters erstreckt. Weiterhin betrifft die Erfindung die Verwendung dieses Sensors.

Aus der US 7,813,599 B2 ist bekannt, einen Lichtwellenleiter mit drei Kernen auszustatten. Jeder dieser Kerne soll eine Mehrzahl von Bragg-Gittern aufweisen. In die Kerne eingekoppeltes Licht wird an den Faser-Gittern teilweise reflektiert und teilweise transmittiert. Die reflektierte Wellenlänge bzw. der reflektierte Wellenlängenbereich hängt von der Gitterkonstanten des Bragg-Gitters ab.

Die Gitterkonstante wiederum ist bei der Herstellung des Bragg-Gitters festgelegt und ändert sich nach der Herstellung durch Einwirken mechanischer Spannung oder Temperatur. Sofern der Lichtwellenleiter eine Krümmung aufweist, weisen die drei Kerne unterschiedliche Krümmungsradien auf, so dass jeder Kern eine andere mechanische Spannung erfährt. Beispielsweise wird ein näher am Krümmungsmittelpunkt liegender Kern gestaucht und ein vom Krümmungsmittelpunkt weiter entfernt liegender Kern gedehnt. Somit kann durch Bestimmung der von den Bragg-Gittern reflektierten Wellenlängen die Form des Lichtwellenleiters im Raum bestimmt werden.

Dieser bekannte Sensor weist jedoch den Nachteil auf, dass eine aufwendige Optik erforderlich ist, um Licht in drei Kerne ein- und auszukoppeln. Da die drei Kerne individuell ausgelesen werden müssen, ergeben sich erhöhte Anforderungen an den spektrometrischen Nachweis der jeweils reflektierten Wellenlängen. Sofern sich die Form des Lichtwellenleiters zeitlich ändert, muss darüber hinaus die Messung der reflektierten Spektren aus allen Kernen auch zeitlich koordiniert werden.

Aus der EP 0 250 194 A2 ist bekannt für mechanische Spannungen die Signalschwächung als Messsignal zu verwenden, welche sich ergibt, wenn eine Mehrzahl kurzer Kerne in den Mantel einer optischen Faser eingebracht wird und das in diese Kerne gekoppelte Licht aus dem Lichtwellenleiter ausgekoppelt wird.

Ausgehend von diesem bekannten Sensor liegt der Erfindung die Aufgabe zugrunde, einen faseroptischen Sensor bereitzustellen, welcher einfach hergestellt werden und mit geringem Aufwand betrieben werden kann.

Die Aufgabe wird erfindungsgemäß durch einen faseroptischen Sensor gemäß Anspruch 1 und eine Verwendung gemäß Anspruch 13 gelöst.

Der faseroptische Sensor weist zumindest einen Lichtwellenleiter auf. In einigen Ausführungsformen der Erfindung kann der faseroptische Sensor genau einen Lichtwellenleiter aufweisen. Der Lichtwellenleiter kann eine im Wesentlichen zylindrische Außenkontur aufweisen und mit seiner Längserstreckung entlang eines Werkzeuges verlaufen, beispielsweise entlang eines Endoskops oder entlang eines Katheters. Sofern das Endoskop oder der Katheter von einer geradlinigen Form abweichen, kann durch die Bestimmung der Krümmung des faseroptischen Sensors die genaue Form des Werkzeuges im Raum erfasst werden. Sofern die absolute Koordinate bzw. Lage eines Punktes bekannt ist, kann auch die absolute Position aller Teile bzw. Abschnitte des Werkzeuges bestimmt werden. Darüber hinaus kann durch Vergleich der Ist-Form des Werkzeuges mit hinterlegten Kartendaten das Werkzeug navigiert werden. Die Kartendaten können beispielsweise ein geologisches Profil enthalten, so dass der Verlauf einer Bohrung bzw. die Position eines Bohrwerkzeuges bestimmt werden können. Die Kartendaten können beispielsweise Daten des Gefäßsystems eines menschlichen oder tierischen Körpers repräsentieren, so dass die Position eines Katheters im Körper bestimmbar ist.

In anderen Ausführungsformen der Erfindung kann der faseroptische Sensor Teil einer Glas- oder Kunststoffplatte sein. In wiederum einer anderen Ausführungsform der Erfindung kann der faseroptische Sensor Teil eines Gefäßes oder einer Rohrleitung sein, so dass die Form dieser Rohrleitung und/oder die Konzentration vorgebbarer Moleküle in der Umgebung des faseroptischen Sensors bestimmt werden kann.

Der Lichtwellenleiter weist zumindest einen ersten Kern auf, welcher sich im Wesentlichen über die gesamte Länge des Lichtwellenleiters erstreckt. Der erste Kern ist von einem Mantel umgeben, welcher einen niedrigeren Brechungsindex aufweist als der zumindest eine Kern. Hierdurch kann Licht, welches in den Kern eingekoppelt wird, durch Totalreflexion an der Grenzfläche zwischen Kern und Mantel entlang der Längserstreckung des Lichtwellenleiters geführt werden. In einigen Ausführungsformen der Erfindung kann der Kern und der Mantel aus Quarzglas bestehen, wobei der Brechungsindex des Kernes durch Dotierung mit Germanium oder Phosphor vom Brechungsindex des Mantels abweicht.

In anderen Ausführungsformen der Erfindung kann der Lichtwellenleiter aus Polymermaterialien bestehen, wobei durch unterschiedliche Zusammensetzung, unterschiedliche Vernetzung oder Dotierung das gewünschte Verhältnis der Brechungsindizes zwischen Kern und Mantel erhalten wird.

Zwischen Kern und Mantel kann eine geometrisch definierte Grenzfläche ausgebildet sein. In anderen Ausführungsformen der Erfindung kann der Kern kontinuierlich in den Mantel übergehen, so dass sich der effektive Kerndurchmesser in Abhängigkeit der Wellenlänge und/oder des Einstrahlwinkels ergibt.

Auf der Außenseite des Mantels kann in einigen Ausführungsformen der Erfindung eine optionale Schutzbeschichtung aufgebracht sein, welche das Eintreten von Streulicht verhindert und/oder die mechanische Belastbarkeit des Lichtwellenleiters erhöht und/oder die Befestigung bzw. das Einbetten an oder in einem Werkzeug erleichtert.

Erfindungsgemäß wird nun vorgeschlagen, dass der Sensor zumindest einen zweiten Kern aufweist, welcher zumindest teilweise vom Mantel umgeben ist und dessen Längserstreckung geringer ist, als die gesamte Längserstreckung des Lichtwellenleiters.

Dieser zweite Kern soll zumindest ein Bragg-Gitter aufweisen. Bei Betrieb des faseroptischen Sensors wird Licht in den ersten Kern eingekoppelt und durchläuft die Längserstreckung des Lichtwellenleiters. An vorgebbaren Stellen, an welchen ein zweiter Kern eingebracht ist, kann ein Teil der im ersten Kern geführten optischen Leistung durch evaneszente Kopplung in den zweiten Kern übertreten. Aufgrund der unterschiedlichen Brechungsindizes im zweiten Kern und im diesen umgebenden Mantel wird ein Teil des Lichtes daraufhin im zweiten Kern geführt. Am Bragg-Gitter wird ein vorgebbarer Wellenlängenbereich reflektiert. Das reflektierte Licht kann wiederum in den ersten Kern übertreten und am Ende des Lichtwellenleiters nachgewiesen werden.

Zur Messung der Krümmung und/oder der Temperatur und/oder einwirkender mechanischer Spannungen an mehreren Orten des Lichtwellenleiters können mehrere zweite Kerne mit jeweils zugeordneten Bragg-Gittern in den Mantel des Lichtwellenleiters eingebracht sein. Gleichwohl kann eine einfache Kontaktierung des Lichtwellenleiters mit einem Spektrometer und einer Lichtquelle erfolgen, da der Lichtwellenleiter an seinem Ende nur eine geringere Anzahl von ersten Kernen aufweist. Sofern der Lichtwellenleiter nur einen einzigen ersten Kern aufweist, kann die Kontaktierung in an sich bekannter Weise mit aus der optischen Nachrichtenübertragung bekannten Vorrichtungen und Verfahren erfolgen. Hierdurch wird die Signalauslese und -erzeugung besonders einfach und zuverlässig.

In einigen Ausführungsformen der Erfindung kann der erste Kern auf der Symmetrieachse des Lichtwellenleiters angeordnet sein. Sofern der Lichtwellenleiter einen Rotationszylindrischen Querschnitt aufweist, kann der erste Kern konzentrisch zum umgebenden Mantel angeordnet sein. Diese Ausführungsform hat den Vorteil, dass der erste Kern eine neutrale Faser im Lichtwellenleiter bildet und somit von mechanischen Einflüssen weitgehend unbeeinflusst bleibt.

In einigen Ausführungsformen der Erfindung kann die Längserstreckung des zweiten Kernes zumindest einen ersten Längsabschnitt, zumindest einen zweiten Längsabschnitt und zumindest einen dritten Längsabschnitt aufweisen. In diesem Fall ist der erste Längsabschnitt dazu eingerichtet, eine optische Kopplung zwischen dem zweiten Kern und dem ersten Kern zu ermöglichen, der dritte Längsabschnitt ist dazu eingerichtet, beabstandet zum ersten Kern im Mantel geführt zu werden und zumindest ein Bragg-Gitter aufzunehmen, wobei der zweite Längsabschnitt den ersten Längsabschnitt und den dritten Längsabschnitt miteinander verbindet. Diese Ausführungsform hat den Vorteil, dass durch den Abstand des dritten Längsabschnittes von der Symmetrieachse des Lichtwellenleiters das Ansprechverhalten des Sensors eingestellt werden kann, d.h. der faseroptische Sensor kann entweder geringe Verformungen mit großer Genauigkeit nachweisen oder mit seinem Messbereich einen großen Bereich der Verformung abdecken. Da weiterhin der dritte Längsabschnitt so weit vom ersten Kern beabstandet sein kann, dass kein Licht in den zweiten Kern übertreten kann, kann eine störungsfreie Messung erfolgen. Demgegenüber ist der erste Längsabschnitt des zweiten Kernes dazu vorgesehen, einen definierten Übertritt des Lichtes zwischen den Kernen zu ermöglichen. Dies betrifft einerseits die in den ersten Kern eingekoppelte Strahlung, welche zur Abfrage des Bragg-Gitters dient, und andrerseits die vom Bragg-Gitter reflektierte Strahlung, welche zuverlässig in den ersten Kern und damit zum auslesenden Spektrometer gelangen kann.

In einigen Ausführungsformen der Erfindung kann der zumindest eine zweite Kern durch Materialbearbeitung des Mantels des Lichtwellenleiters mit einem Laser erzeugt werden. In einigen Ausführungsformen der Erfindung kann hierzu ein Kurzpulslaser verwendet werden, d.h. ein Laser, welcher Einzelpulse oder Pulszüge mit einer Dauer von weniger als einer Pikosekunde oder weniger als 100 Femtosekunden aussendet. Durch eine fokussierende Optik, welche eine unterschiedliche Fokuslage erzeugen kann, kann die Tiefe der Materialmodifikation im Mantel eingestellt werden. Durch laterales Verschieben bzw. relatives Bewegen von Lichtwellenleiter und Laser kann aus einzelnen, vom Laser belichteten Punkten ein fortlaufender zweiter Kern im Mantel des Lichtwellenleiters erzeugt werden.

In einigen Ausführungsformen der Erfindung kann durch Materialbearbeitung mit Laserstrahlung auch zumindest ein Bragg-Gitter in zumindest einem Kern erzeugt werden. Hierzu werden Raumbereiche mit unterschiedlichem Brechungsindex in zumindest einem Kern erzeugt. Der Abstand einer Mehrzahl solcher Raumbereiche definiert die Gitterkonstante des Bragg-Gitters, welche die reflektierte Wellenlänge bzw. den reflektierten Wellenlängenbereich festlegt. Durch Temperaturänderung, Streckung oder Stauchung des Kernes verändert sich diese Gitterkonstante, so dass Verformung, mechanische Spannung oder Temperaturänderung durch Änderung der transmittierten oder reflektierten Wellenlänge nachgewiesen werden kann.

In einigen Ausführungsformen der Erfindung weist der Sensor eine Mehrzahl von zweiten Kernen auf, welche jeweils einen dritten Längsabschnitt aufweisen, welche in zumindest zwei unterschiedlichen Abständen und/oder zur Symmetrieachse des Lichtwellenleiters angeordnet sind. Dieses Merkmal hat die Wirkung, dass weiter außen liegende zweite Kerne bei vorgebbarer Verformung eine größere Streckung bzw. Stauchung erfahren als weiter innen liegende Kerne. Somit können große Verformungen mit großem Dynamikbereich durch zweite Kerne gemessen werden, welche näher an der Symmetrieachse des Lichtwellenleiters liegen. Kleine Verformungen können hingegen mit großer Genauigkeit durch die weiter außen liegenden Kerne bestimmt werden.

In einigen Ausführungsformen der Erfindung können an einer Stelle, d.h. an einem Punkt der Längserstreckung des Lichtwellenleiters, Bragg-Gitter in den zweiten Kernen und im ersten Kern angeordnet sein. Sofern der erste Kern auf der Symmetrieachse und damit in der neutralen Faser des Lichtwellenleiters liegt, bleibt das Bragg-Gitter im ersten Kern von mechanischer Verformung unbeeinflusst. Alle Bragg-Gitter ändern jedoch ihre Gitterkonstanten bei wechselnder Temperatur, so dass das Signal des Bragg-Gitters des ersten Kernes zur Temperaturkompensation der Messignale der zweiten Kerne verwendet werden kann.

In einigen Ausführungsformen kann der erste Kern dazu eingerichtet sein, bei Anregung mit monochromatischer Laserstrahlung breitbandiges Licht zu erzeugen. In einigen Ausführungsformen der Erfindung kann dies dadurch geschehen, dass der erste Kern einen Dotierstoff enthält. In einigen Ausführungsformen kann der Dotierstoff Erbium und/oder Ytterbium sein. Diese Ausführungsform der Erfindung hat den Vorteil, dass durch breitbandiges oder weißes Licht eine Mehrzahl von Bragg-Gittern unterschiedlicher Gitterkonstante ausgelesen werden können. Die Erzeugung dieses breitbandigen Lichtes kann mit großer Effizienz innerhalb des ersten Kernes durch induzierte Emission erfolgen. Bei Verwendung einer intensiven Laserlichtquelle zum optischen Pumpen des ersten Kernes kann die im ersten Kern des Lichtwellenleiters erzeugte breitbandige Strahlung eine größere Intensität aufweisen, als eine Strahlung, welche beispielsweise mit einer Superlumineszenzdiode außerhalb des Lichtwellenleiters erzeugt werden kann. Hierdurch kann sich das Signal-/Rauschverhältnis in einigen Ausführungsformen der Erfindung verbessern.

In einigen Ausführungsformen der Erfindung kann der erste Längsabschnitt des zweiten Kernes geometrisch mit einem Teil bzw. einem Teilabschnitt des ersten Kernes überlappen. Da beide Kerne somit geometrisch zumindest zum Teil den gleichen Raum einnehmen und das eingekoppelte Licht im ersten Kern geführt wird, ergibt sich auf diese Weise eine sehr effiziente Übertragung des Lichtes vom ersten Kern in den zweiten Kern.

In einigen Ausführungsformen der Erfindung kann der erste Längsabschnitt des zweiten Kernes vom ersten Kern einen Abstand von weniger als 3 µm oder weniger als 2,5 µm oder weniger als etwa 2 µm aufweisen. In diesem Fall kann Licht durch evaneszente Kopplung vom ersten Kern in den zweiten Kern und vom zweiten Kern in den ersten Kern übertreten. Da der zweite Längsabschnitt des zweiten Kernes sich zunehmend vom ersten Kern entfernt, wird die Kopplung rasch schwächer, so dass im dritten Längsabschnitt keine wesentliche Kopplung zwischen den Kernen mehr auftritt.

In einigen Ausführungsformen der Erfindung kann der dritte Längsabschnitt von zumindest einem zweiten Wellenleiter einen Abstand von weniger als etwa 10 µm oder weniger als etwa 5 µm oder weniger als etwa 3 µm oder weniger als etwa 2 µm oder weniger als etwa 1 µm zur Mantelfläche des Lichtwellenleiters aufweisen. Licht, welches in einem solchen zweiten Kern nahe der Oberfläche des Lichtwellenleiters geführt wird, kann durch anhaftende Adsorbate beeinflusst werden. Auf diese Weise kann die Konzentration vorgebbarer Moleküle in der Umgebung des Sensors bestimmt werden. Eine geringe Konzentration dieser Moleküle führt zu einem geringen Anhaften an der Mantelfläche des Lichtwellenleiters und somit zu einer geringen Beeinflussung des im zweiten Kern geführten optischen Signals. Umgekehrt führt eine erhöhte Konzentration zu einem erhöhten Anhaften an der Mantelfläche und dadurch zu einer stärkeren Beeinflussung des optischen Signals im zweiten Kern des Sensors.

In einigen Ausführungsformen der Erfindung kann zumindest eine Teilfläche der Mantelfläche des Lichtwellenleiters funktionalisiert sein. Diese Funktionalisierung hat die Wirkung, dass vorgebbare Moleküle, deren Konzentration bestimmt werden soll, vermehrt an der Mantelfläche anhaften. Gleichzeitig kann das Anhaften anderer Moleküle unterdrückt sein, so dass die Sensitivität eines solchen Sensors erhöht sein kann.

In einigen Ausführungsformen der Erfindung kann der dritte Längsabschnitt zumindest zwei Bragg-Gitter aufweisen, welche unterschiedliche Gitterkonstanten und damit unterschiedliche Resonanzfrequenzen aufweisen. In einigen Ausführungsformen der Erfindung kann der Abstand zweier Bragg-Gitter in einem zweiten Kern etwa 3 mm bis etwa 10 mm betragen. In einigen Ausführungsformen der Erfindung kann ein Bragg-Gitter so ausgebildet sein, dass die von ihm reflektierte Wellenlänge resonant mit einer optischen Anregung des nachzuweisenden Moleküls ist. Die vom zweiten Bragg-Gitter reflektierte Wellenlänge kann hingegen nicht resonant sein. Auf diese Weise lässt sich über eine Auswertung des Intensitätsverhältnisses des reflektierten Lichtes sehr einfach die Teilchendichte an der Mantelfläche des Lichtwellenleiters bestimmen.

In einigen Ausführungsformen der Erfindung kann eine Mehrzahl zweiter Kerne bis nahe an die Oberfläche des Lichtwellenleiters geführt sein, wobei unterschiedliche Teilflächen der Mantelfläche des Lichtwellenleiters unterschiedlich funktionalisiert sein können. Dies ermöglicht den Nachweis unterschiedlicher Moleküle mit einem einzigen Sensor.

Sofern eine Mehrzahl zweiter Kerne bis nahe an die Oberfläche des Lichtwellenleiters geführt ist, kann die Konzentration vorgebbarer Moleküle ortsaufgelöst an unterschiedlichen Stellen entlang der Längserstreckung des Lichtwellenleiters bestimmt werden.

In einigen Ausführungsformen der Erfindung können in einem Längsabschnitt bzw. in einer Stelle des Lichtwellenleiters mehrere zweite Kerne mit jeweils zugeordneten Bragg-Gittern angeordnet sein. In einigen Ausführungsformen der Erfindung kann der in radialer Richtung zwischen zwei benachbarten zweiten Kernen eingeschlossene Winkel zwischen etwa 90° und etwa 180° betragen. In anderen Ausführungsformen der Erfindung kann der in radialer Richtung zwischen zwei zweiten Kernen eingeschlossene Winkel zwischen etwa 90° und etwa 120° betragen. In wiederum einer anderen Ausführungsform der Erfindung kann der in radialer Richtung zwischen zwei benachbarten zweiten Kernen eingeschlossene Winkel zwischen etwa 110° und etwa 130° betragen.

Durch eine Mehrzahl von zweiten Kernen kann eine Messung der Verformung in allen Raumrichtungen erfolgen, so dass der vorgeschlagene Sensor dreidimensional im Raum lokalisiert werden kann. Sofern eine Lokalisierung lediglich in einer Ebene erforderlich ist, können weniger zweite Kerne im Lichtwellenleiter des Sensors vorhanden sein, welche dann auch einen unterschiedlichen Winkel zueinander einschließen.

Nachfolgend soll die Erfindung anhand von Figuren ohne Beschränkung des allgemeinen Erfindungsgedankens näher erläutert werden. Dabei zeigt
Figur 1 einen Ausschnitt aus einer ersten Ausführungsform des vorgeschlagenen Sensors.
Figur 2 zeigt einen Ausschnitt aus einer zweiten Ausführungsform des erfindungsgemäßen Sensors.
Figur 3 zeigt einen Ausschnitt aus einer dritten Ausführungsform des erfindungsgemäßen Sensors.
Figur 4 zeigt einen vergrößerten Ausschnitt der dritten Ausführungsform der vorliegenden Erfindung.
Figur 5 erläutert das Messprinzip zum Nachweis vorgebbarer Moleküle.
Figur 6 zeigt die Signalerzeugung und -auslese.
Figur 7 zeigt unterschiedliche Ausführungsformen des Querschnitts eines rotationssymmetrischen Sensors
Figur 8 zeigt beispielhaft eine Ausführungsform des Querschnittes eines Sensors mit rechteckigem Querschnitt.

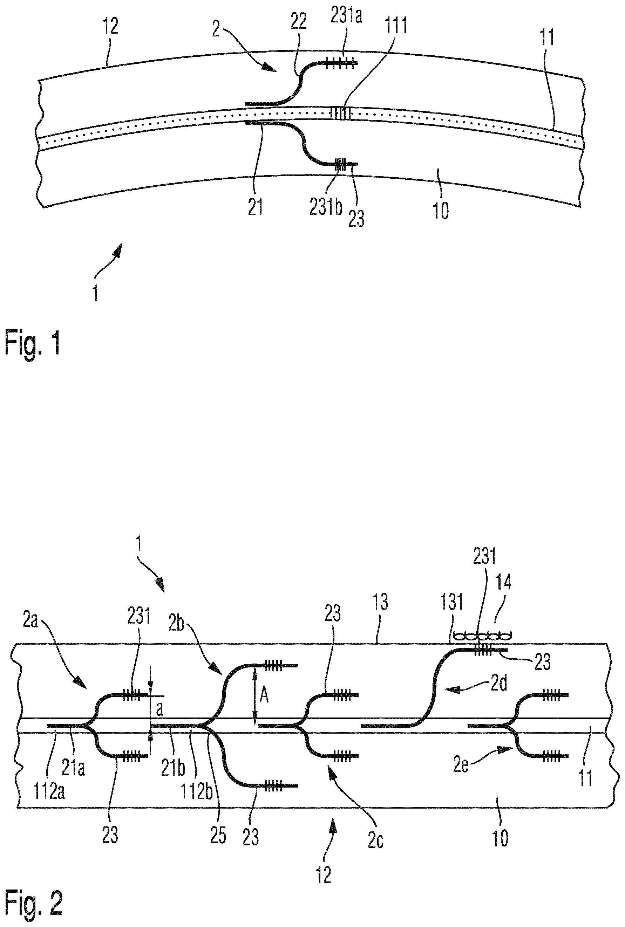

Figur 1 zeigt eine erste Ausführungsform der Erfindung. In Figur 1 ist ein Ausschnitt aus einem faseroptischen Sensor 1 dargestellt. Der faseroptische Sensor 1 enthält einen Lichtwellenleiter 12. Der Lichtwellenleiter 12 umfasst einen Mantel 10 mit einem Kern 11. Im dargestellten Ausführungsbeispiel ist der Querschnitt rund, so dass der Lichtwellenleiter 12 eine in etwa zylindrische Außenkontur aufweist.

Der erste Kern 11 ist konzentrisch zum Mantel 10 angeordnet, d.h. der erste Kern 11 befindet sich auf der Symmetrieachse des Lichtwellenleiters 12. Der erste Kern 11 erstreckt sich im Wesentlichen über die gesamte Länge des Lichtwellenleiters 12. Dies schließt nicht aus, dass der erste Kern 11 nur an einem Ende des Lichtwellenleiters 12 bis zu dessen Ende geführt ist, um dort mit einer optischen und/oder elektronischen Schaltung zur Signalauslese und Signalerzeugung verbunden zu werden. Am gegenüberliegenden Ende kann der Lichtwellenleiter auch im Material des Mantels 10 enden, so dass ein weiterer Längsabschnitt des Lichtwellenleiters 12 vorhanden ist, in welchem der erste Kern 11 fehlt.

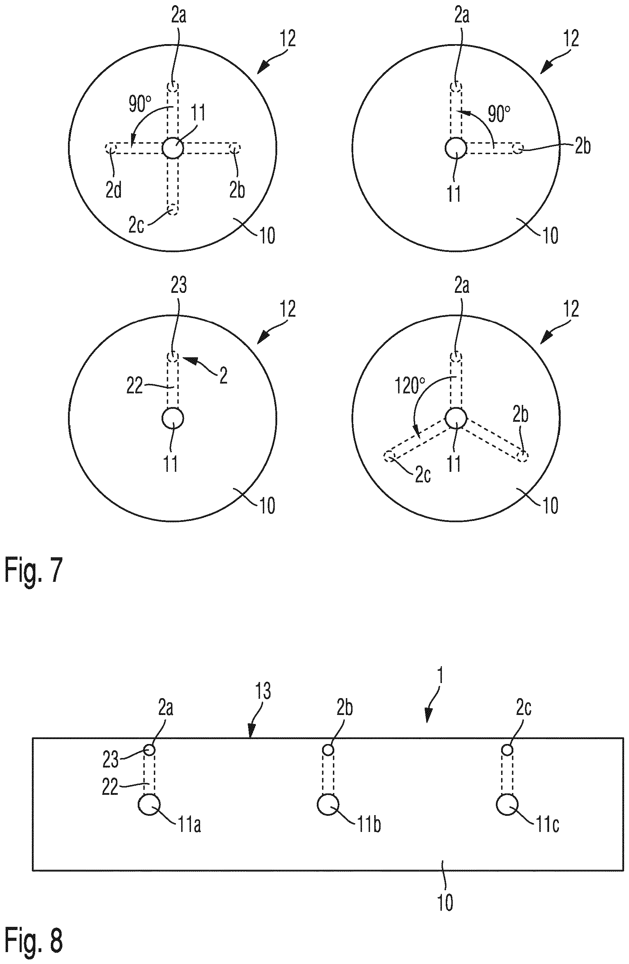

Weiterhin weist der faseroptische Sensor 1 zwei zweite Kerne 2 auf. Im dargestellten Ausführungsbeispiel ist ein zweiter Kern in der oberen Hälfte des Lichtwellenleiters 12 angeordnet und ein zweiter Kern 2 ist in der unteren Hälfte des Lichtwellenleiters 12 angeordnet. Die tatsächliche Lage innerhalb des Lichtwellenleiters wird nachfolgend anhand der Figur 7 näher erläutert. Auch wenn zwei zweite Kerne 2 in Figur 1 dargestellt sind, müssen diese nicht notwendiger Weise innerhalb derselben Schnittebene liegen. Der Brechungsindex der zweiten Kerne unterscheidet sich vom Brechungsindex des umgebenden Mantels, so dass Licht an der Grenzfläche reflektiert werden kann.

Jeder zweite Kern 2 weist einen ersten Längsabschnitt 21, einen zweiten Längsabschnitt 22 und einen dritten Längsabschnitt 23 auf. Der erste Längsabschnitt 21 ist dazu eingerichtet, durch evaneszente Kopplung Licht zu empfangen, welches im ersten Kern 11 geführt wird. Gleichzeitig kann im zweiten Kern 2 geführtes Licht durch evaneszente Kopplung in den ersten Kern 11 überführt werden.

Der dritte Längsabschnitt 23 weist einen größeren Abstand zum ersten Kern 11 auf. Hierdurch wird eine optische Kopplung zwischen den Kernen im dritten Längsabschnitt 23 vermieden. Im dritten Längsabschnitt 23 befindet sich jeweils ein zugeordnetes Bragg-Gitter 231a bzw. 231b.

Der zweite Längsabschnitt 22 verbindet den ersten Längsabschnitt 21 mit dem dritten Längsabschnitt 23. Hierdurch wird Licht, welches im ersten Kern 11 geführt wird, über den ersten Längsabschnitt 21 und den zweiten Längsabschnitt 22 und den dritten Längsabschnitt 23 geleitet. Dort wird ein Teil der elektromagnetischen Strahlung am jeweiligen Bragg-Gitter 231 reflektiert, so dass dieser Anteil des Lichtes erneut durch den zweiten Längsabschnitt 22 in den ersten Längsabschnitt 21 geleitet wird und dort durch evaneszente Kopplung in den ersten Kern 11 gelangt. Das reflektierte Licht propagiert weiter zum Ende des Wellenleiters 12, wo es mittels eines Spektrometers nachgewiesen werden kann.

Die vom Bragg-Gitter 231a bzw. 231b reflektierte Wellenlänge hängt von der Gitterkonstanten des Bragg-Gitters ab, welche wiederum durch mechanische Spannung beeinflusst werden kann. Wie in Figur 1 dargestellt, wird bei einer Krümmung des Lichtwellenleiters 12 das untere Bragg-Gitter 231b gestaucht und das obere Bragg-Gitter 231a gedehnt. Somit kann durch die Änderung des reflektierten Spektrums die Krümmung des Lichtwellenleiters 12 bestimmt werden, so dass der Faseroptische Sensor 1 als ein- oder mehrdimensionaler Lagesensor arbeitet.

Der erste Kern 11 enthält ein weiteres optionales Bragg-Gitter 111, welches in etwa an der gleichen Stelle der Längserstreckung des Lichtwellenleiters 12 angeordnet ist. Da der erste Kern 11 im Mittelpunkt des Lichtwellenleiters 12 angeordnet ist, erfährt dieser als neutrale Faser bei der Biegung des Lichtwellenleiters 12 keine Längenänderung. Sofern dennoch eine Änderung des reflektierten Spektrums nachgewiesen wird, so ist diese auf eine Temperaturänderung und die dadurch hervorgerufenen Änderungen des Brechungsindex und der Länge des Lichtwellenleiters 12 zurückzuführen. Somit können die am optionalen Bragg-Gitter 111 erhaltenen Messwerte zur Temperaturkompensation der Messwerte der Bragg-Gitter 231a und 231b verwendet werden.

Figur 2 zeigt den Querschnitt durch eine zweite Ausführungsform der Erfindung. Gleiche Bestandteile der Erfindung sind mit gleichen Bezugszeichen versehen, so dass sich die Beschreibung auf die wesentlichen Unterschiede beschränkt.

Auch der faseroptische Sensor 1 gemäß der zweiten Ausführungsform umfasst einen Lichtwellenleiter 12. Im Lichtwellenleiter 12 ist ein erster Kern 11 ausgebildet, welcher sich auf der Symmetrieachse bzw. im Zentrum des Lichtwellenleiters 12 befindet. Im umgebenden Mantel 10 sind zweite Kerne 2a, 2b, 2c, 2d und 2e ausgebildet. Auch diese Kerne müssen nicht notwendiger Weise in der Schnittebene liegen, wie bereits vorstehend erläutert.

Zur Einkopplung des im ersten Kern 11 geführten Lichtes in die zweiten Kerne 2a, 2b, 2c, 2d und 2e weist der erste Längsabschnitt 21 der zweiten Kerne 2 jeweils eine geometrische Überlappung mit einem Teilabschnitt 112 des ersten Kernes 11 auf. Beispielsweise überlappt der erste Längsabschnitt 21a der zweiten Kerne 2a mit einem Längsabschnitt 112a des ersten Kernes 11. Weiterhin überlappt der erste Längsabschnitt 21b des zweiten Kernes 2b mit einem Längsabschnitt 112b des ersten Kernes 11. Somit kann Licht, welches im ersten Kern 11 geführt wird, in einfacher Weise und mit hoher Effizienz in den zweiten Kern 2 eingekoppelt werden.

Weiterhin weisen die zweiten Kerne jeweils eine Abzweigung bzw. Bifurkation 25 auf. Somit kann eine Mehrzahl von zweiten Kernen 2 einen gemeinsamen ersten Längsabschnitt 21 aufweisen. An die Bifurkation 25 setzt dann jeweils ein zugeordneter zweiter Längsabschnitt 22 und ein dritter Längsabschnitt 23 an.

Weiterhin ist in Figur 2 gezeigt, dass die dritten Längsabschnitte 23 der zweiten Kerne 2a, 2c und 2e einen kleineren Abstand a zur Symmetrieachse des Lichtwellenleiters 12 aufweisen. Demgegenüber weisen die dritten Längsabschnitte 23 der zweiten Kerne 2b einen größeren Abstand A zur Symmetrieachse auf. Somit können die zweiten Kerne 2a, 2c und 2e einen großen Krümmungs- bzw. Verformungsbereich nachweisen. Die zweiten Kerne 2b sind dazu geeignet, einen geringeren Bereich der Krümmung mit höherer Auflösung und damit höherer Genauigkeit nachzuweisen.

Schließlich zeigt Figur 2 einen zweiten Kern 2d, welcher zum Nachweis von Molekülen 14 eingerichtet ist. Die Moleküle 14 können Bestandteil der den Lichtwellenleiter umgebenden Atmosphäre sein bzw. in einer wässrigen Lösung gelöst sein, in welche der Lichtwellenleiter 12 eingetaucht wird.

Die Mantelfläche 13 weist zumindest eine Teilfläche 131 auf, welche funktionalisiert wurde, d.h. die Teilfläche 131 ist so ausgestaltet, dass die Moleküle 14 sich bevorzugt auf dieser Teilfläche anlagern und/oder dass die Anlagerung anderer Moleküle auf der Teilfläche 131 reduziert oder vermieden wird.

In einem Abstand von weniger als 10 µm unter der Mantelfläche 13 befindet sich der dritte Längsabschnitt 23 des zweiten Kernes 2g. Licht, welches im dritten Längsabschnitt 23 geführt ist kann zumindest teilweise aus dem Mantel 10 des Lichtwellenleiters 12 austreten und resonant von den Molekülen 14 absorbiert werden. Zur Filterung einer Wellenlänge, welche selektiv von den Molekülen 14 absorbiert wird und daher zum Nachweis der Anwesenheit dieser Moleküle verwendet werden kann, dient ein Bragg-Gitter 231 im dritten Längsabschnitt 231 im dritten Längsabschnitt 23 des zweiten Kernes 2d.

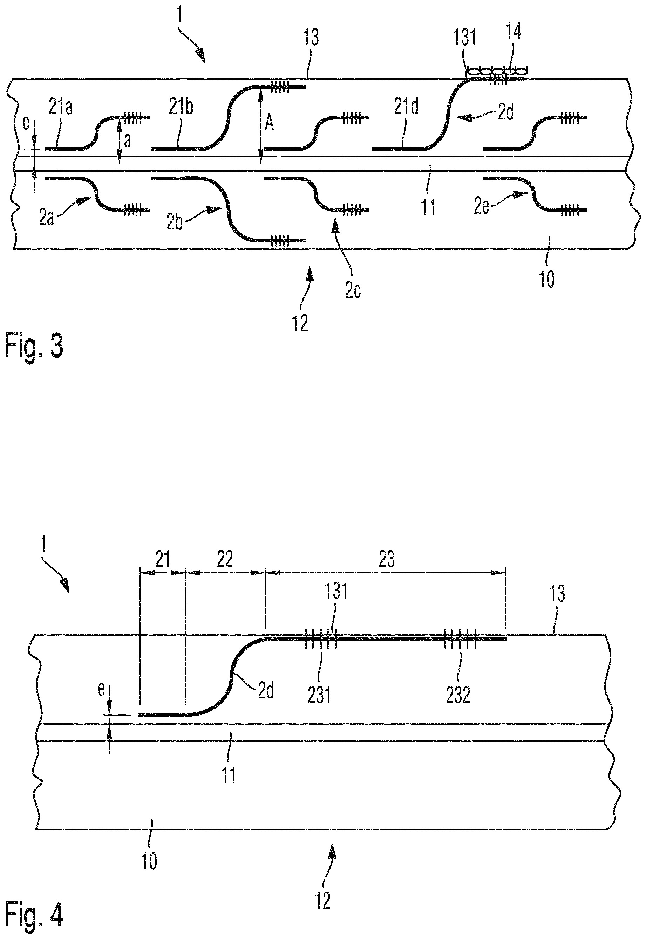

Figur 3 zeigt eine dritte Ausführungsform der vorliegenden Erfindung. Gleiche Teile der Erfindung sind mit gleichen Bezugszeichen versehen, so dass sich die nachfolgende Beschreibung auf die wesentlichen Unterschiede beschränkt.

Auch die dritte Ausführungsform weist einen Wellenleiter 12 auf, welcher einen ersten Kern 11 aufweist und eine Mehrzahl zweiter Kerne 2a, 2b, 2c und 2e. Dabei sind die zweiten Kerne 2a, 2c und 2e dazu eingerichtet, große Verformungen mit geringer Auflösung zu messen und der zweite Kern 2b ist dazu eingerichtet, geringe Verformungen mit hoher Auflösung zu detektieren. Schließlich ist ein zweiter Kern 2d vorgesehen, um Moleküle 14 auf einer Teilfläche 131 des Mantels 13 nachzuweisen.

Der wesentliche Unterschied zur zweiten Ausführungsform besteht darin, dass die ersten Längsabschnitte 21a, 21b, 21c, 21d und 21e der zweiten Kerne 2a, 2b, 2c, 2d und 2e in einem Abstand e zwischen ihrem Rand und dem Rand des ersten Kernes 11 angeordnet sind. Der Abstand e kann beispielsweise weniger als 3 Mikrometer, weniger als 2,5 µm oder weniger als 2 µm betragen. In einigen Ausführungsformen der Erfindung beträgt der Abstand e weniger als etwa 3 Wellenlängen oder weniger als etwa 2 oder weniger als etwa 1 Wellenlänge des im ersten Kern geführten Lichtes. Dies führt dazu, dass Licht durch evaneszente Kopplung vom ersten Kern in den zweiten Kern und vom zweiten Kern in den ersten Kern übertreten kann.

Figur 4 zeigt einen Ausschnitt aus Figur 3. Dargestellt ist ein zweiter Kern 2d, dessen dritter Längsabschnitt 23 bis nahe der Oberfläche 13 des Mantels 10 des Lichtwellenleiters 12 geführt ist. Beispielsweise kann der dritte Längsabschnitt 23 des zweiten Kernes 2d einen Abstand von weniger als etwa 10 µm oder weniger als etwa 5 µm oder weniger als etwa 3 µm oder weniger als etwa 2 µm oder weniger als etwa 1 µm zur Mantelfläche 13 des Lichtwellenleiters 12 aufweisen.

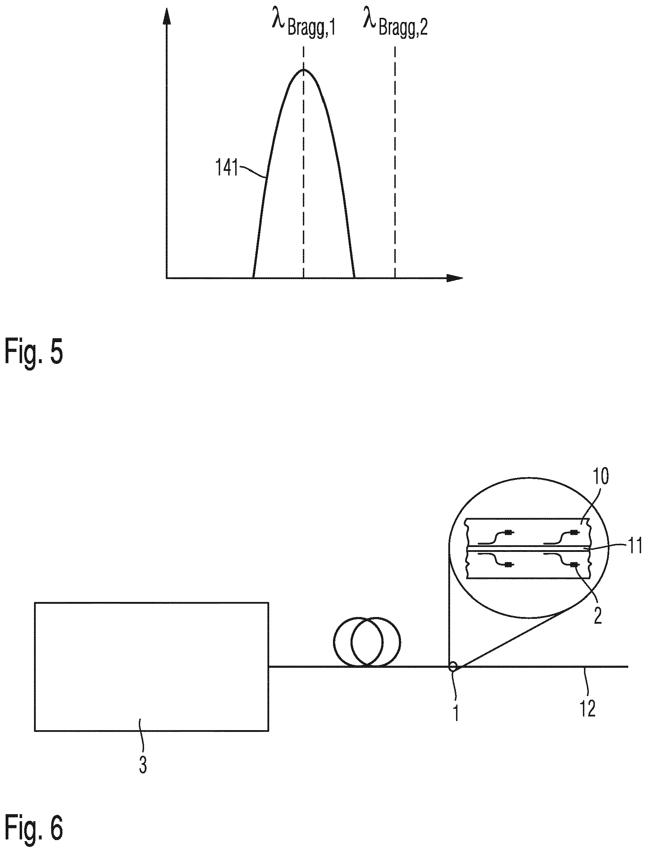

Eine Teilfläche 131 der Mantelfläche 13 kann funktionalisiert sein, um die Absorption vorgebbarer Moleküle aus der Gasphase oder einer wässrigen Lösung zu erleichtern. Sofern die nachzuweisenden Moleküle an der Teilfläche 131 gebunden oder adsorbiert sind, kann elektromagnetische Strahlung einen elektronischen Übergang des Moleküls anregen, so dass die Strahlung absorbiert wird und die anhaftenden Moleküle spektroskopisch nachgewiesen werden können. Dies ist in Figur 5 nochmals verdeutlicht. Dabei ist auf der Ordinate die Intensität elektromagnetischer Strahlung aufgetragen und auf der Abszisse die Wellenlänge.

Die zwei Bragg-Gitter 231 und 232 weisen eine unterschiedliche Gitterkonstante auf, welche in Figur 5 als λ_{Bragg 1} und λ_{Bragg 2} bezeichnet sind. Weiterhin ist die Absorptionsbande 141 eines nachzuweisenden Moleküls in Figur 5 ersichtlich. Die zwei Bragg-Gitter 231 und 232 reflektieren somit unterschiedliche Anteile des elektromagnetischen Spektrums, welches über den ersten Kern 11 und den ersten Längsabschnitt 21 des zweiten Kernes 2d in den dritten Längsabschnitt 23 geleitet wird. Das Intensitätsverhältnis kann mit der Auswerteschaltung 3 bestimmt werden, so dass aus dem Intensitätsverhältnis unmittelbar auf die Anwesenheit der Moleküle 14 geschlossen werden kann. Eine größere Anzahl an Molekülen bewirkt dabei eine größere Schwächung des Signals, so dass aus dem Intensitätsverhältnis auch auf die Konzentration der Moleküle in der Umgebung des Sensors 1 geschlossen werden kann. In anderen Ausführungsformen der Erfindung kann mit der Auswerteschaltung 3 eine durch absorbierte und/oder adsorbierte Moleküle induzierte Verschiebung der vom Bragg-Gitter reflektierten und/oder transmittierten Wellenlänge nachgewiesen werden, um die Konzentration zu bestimmen.

Figur 6 erläutert nochmals die Signalauslese und -erzeugung. Hierzu wird der Lichtwellenleiter 12 mit dem Sensor 1 an eine Auswerteschaltung 3 angeschlossen. Die Auswerteschaltung 3 enthält eine Lichtquelle, beispielsweise einen Halbleiterlaser oder eine Superlumineszenzdiode. Sofern die Lichtquelle einen Halbleiterlaser umfasst, beispielsweise mit einer Wellenlänge von etwa 980 nm, kann der erste Kern 11 so dotiert sein, dass im Kern 11 Licht größerer Bandbreite und/oder größerer Wellenlänge erzeugt wird. Hierdurch können mehrere unterschiedliche Bragg-Gitter 231 und 232 ausgelesen werden.

Zur Bestimmung der Intensität und/oder Wellenlänge und/oder der Laufzeit reflektierter Strahlung kann die Auswerteschaltung 3 darüber hinaus ein Spektrometer und/oder eine Einrichtung zur Bestimmung der Signallaufzeit enthalten. Schließlich können die erhaltenen Messwerte digitalisiert und/oder analog oder digital weiterverarbeitet werden und an eine nicht dargestellte Einrichtung zur Datenspeicherung und/oder Visualisierung ausgegeben werden.

Figur 7 zeigt den Querschnitt durch unterschiedliche Ausführungsformen des Sensors gemäß der vorliegenden Erfindung. Dargestellt ist jeweils ein Lichtwellenleiter 12, welcher einen ersten Kern 11 und einen diesen konzentrisch umgebenden Mantel 10 aufweist. Darüber hinaus enthält der Sensor einen, zwei, drei oder vier zweite Kerne 2, 2a, 2b, 2c und 2d. Diese können in radialer Richtung im Wesentlichen äquidistant angeordnet sein oder asymmetrisch. Beispielsweise können benachbarte zweite Kerne einen Winkel von etwa 90° oder von etwa 120° einschließen. Sofern zumindest zwei zweite Kerne zur Verfügung stehen, kann eine Verformung des Sensors 10 in zwei Raumrichtungen nachgewiesen werden.

Aufgrund der bekannten Längserstreckung kann die Form des Sensors dann dreidimensional im Raum bestimmt werden.

Figur 8 zeigt einen weiteren Querschnitt eines Sensors 1 gemäß der Erfindung. Der Sensor 1 gemäß Figur 8 weist einen in etwa rechteckigen Querschnitt des Mantels 10 auf. Im Mantel 10 sind drei erste Kerne 11a, 11b und 11c angeordnet, welche in etwa parallel zueinander verlaufen. An jedem ersten Kern koppelt zumindest ein zweiter Kern 2a, 2b und 2c an. Im vorliegenden Fall sind die zweiten Kerne 2a, 2b und 2c bis dicht unter die Oberfläche 13 des Mantels 10 geführt, wie anhand von Figur 4 näher erläutert. Auf diese Weise können die Kerne 2a, 2b und 2c zum spektroskopischen Nachweis von Molekülen verwendet werden.

Der Mantels 10 kann beispielsweise eine Begrenzungswand eines Reaktors oder eines Reaktionsgefäßes oder einer Rohrleitung bilden. Auf diese Weise kann durch integrierte optische Spektroskopie die Konzentration vorgebbarer Moleküle und damit der Ablauf der Reaktion bzw. die Zusammensetzung der Materialien im Inneren des Gefäßes überwacht werden. Darüber hinaus gestattet die thermisch induzierte Längenänderung der Bragg-Gitter die Überwachung der Temperatur innerhalb des Reaktionsgefäßes.

Selbstverständlich ist die Erfindung nicht auf die in den Figuren dargestellten Ausführungsformen beschränkt. Die vorstehende Beschreibung ist daher nicht als beschränkend sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Soweit die Ansprüche und die vorstehende Beschreibung "erste" Und "zweite" Merkmale definieren, so dient diese Bezeichnung der Unterscheidung zweier gleichartiger Merkmale, ohne eine Rangfolge festzulegen.

## Patentansprüche

1. Faseroptischer Sensor (1) mit einem Lichtwellenleiter (12), welcher zumindest einen ersten Kern (11) und einen den ersten Kern (11) umgebenden Mantel (10) aufweist, wobei der erste Kern (11) sich im Wesentlichen über die gesamte Länge des Lichtwellenleiters (12) erstreckt,
**dadurch gekennzeichnet, dass**
der Sensor (1) zumindest einen zweiten Kern (2) aufweist, welcher zumindest teilweise vom Mantel (10) umgeben ist, wobei die Längserstreckung des zweiten Kerns (2) geringer ist als die gesamte Länge des Lichtwellenleiters (12) und in den zweiten Kern (2) zumindest ein Bragg-Gitter (231a, 231b, 232) eingebracht ist.

2. Sensor nach Anspruch 1, **dadurch gekennzeichnet, dass** die Längserstreckung des zweiten Kerns (2) aufweist:
zumindest einen ersten Längsabschnitt (21), welcher dazu eingerichtet ist, eine optische Kopplung zwischen dem zweiten Kern (2) und dem ersten Kern (11) zu ermöglichen;
zumindest einen dritten Längsabschnitt (23), welcher beabstandet zum ersten Kern (11) im Mantel (10) geführt ist; und
zumindest einen zweiten Längsabschnitt (22), welcher den ersten Längsabschnitt (21) und den dritten Längsabschnitt (23) verbindet.

3. Sensor nach Anspruch 2, aufweisend eine Mehrzahl von zweiten Kernen (2), welche jeweils einen dritten Längsabschnitt (23) aufweisen, welche in zumindest zwei unterschiedlichen Abständen (a, A) zum ersten Kern (11) angeordnet sind.

4. Sensor nach einem der Ansprüche 1 bis 3, **dadurch gekennzeichnet, dass** der erste Kern (11) dazu eingerichtet ist, bei Anregung mit Laserstrahlung einer ersten Bandbreite Licht einer zweiten Bandbreite zu erzeugen, wobei die zweite Bandbreite größer ist als die erste Bandbreite und/oder
dass der erste Kern (11) einen Dotierstoff enthält und/oder dass der erste Kern (10) Erbium und/oder Ytterbium enthält.

5. Sensor nach einem der Ansprüche 2 bis 4, **dadurch gekennzeichnet, dass** der erste Längsabschnitt (21) des zweiten Kernes (11) geometrisch mit einem Teil (112) des ersten Kerns (11) überlappt und/oder
dass der erste Längsabschnitt (21) des zweiten Kernes (11) vom ersten Kern (11) einen Abstand (e) von weniger als etwa 3 µm oder weniger als etwa 2,5 µm oder weniger als etwa 2,0 µm aufweist.

6. Sensor nach einem der Ansprüche 1 bis 5, **dadurch gekennzeichnet, dass** im ersten Kern (11) zumindest ein Bragg-Gitter (111) angeordnet ist.

7. Sensor nach einem der Ansprüche 2 bis 6, **dadurch gekennzeichnet, dass** der dritte Längsabschnitt (23) von zumindest einem zweiten Kern (2) einen Abstand von weniger als etwa 10 µm oder weniger als etwa 5 µm oder weniger als etwa 3 µm oder weniger als etwa 2 µm oder weniger als etwa 1 µm zur Mantelfläche (13) des Lichtwellenleiters (12) aufweist.

8. Sensor nach Anspruch 7, **dadurch gekennzeichnet, dass** in den dritten Längsabschnitt (23) zumindest zwei Bragg-Gitter (231, 232) eingebracht sind.

9. Sensor nach einem der Ansprüche 7 oder 8, **dadurch gekennzeichnet, dass** eine Teilfläche (131) der Mantelfläche (13) des Lichtwellenleiters (12) funktionalisiert ist.

10. Sensor nach einem der Ansprüche 1 bis 9, **dadurch gekennzeichnet, dass** der in radialer Richtung der zwischen zwei benachbarten zweiten Kernen (2) eingeschlossene Winkel zwischen etwa 90° und etwa 180° beträgt oder dass der in radialer Richtung der zwischen zwei benachbarten zweiten Kernen (2) eingeschlossene Winkel zwischen etwa 90° und etwa 120° beträgt
dass der in radialer Richtung der zwischen zwei benachbarten zweiten Kernen (2) eingeschlossene Winkel zwischen etwa 110° und etwa 130° beträgt.

11. Sensor nach einem der Ansprüche 1 bis 10, **dadurch gekennzeichnet, dass** der Mantel (10) einen in etwa rechteckigen Querschnitt aufweist.

12. Sensor nach einem der Ansprüche 1 bis 11, weiterhin enthaltend, eine Auswerteschaltung (3), welche dazu eingerichtet ist, die Form des Sensors zu bestimmen und/oder eine Auswerteschaltung (3), welche dazu eingerichtet ist, die Konzentration vorgebbarer Moleküle auf zumindest einer Teilfläche (131) des Mantes (10) des Sensors (1) zu bestimmen und/oder eine Auswerteschaltung (3), welche dazu eingerichtet ist, durch Vergleich der Ist-Form des Sensors mit hinterlegten Kartendaten ein den Sensor (1) enthaltendes Werkzeug zu navigieren.

13. Verwendung eines Sensors (1) nach einem der Ansprüche 1 bis 11 zur Bestimmung einer Form eines Werkzeuges im Raum und/oder zur chemischen Analytik und/oder zur Navigation des Werkzeuges.

## Claims

1. Fiber optic sensor (1) comprising an optical waveguide (12) having at least one first core (11) and a cladding (10) surrounding the first core (11), the first core (11) extending substantially over the entire length of the optical waveguide (12), **characterized in that**
the sensor (1) has at least one second core (2), which is at least partially surrounded by the cladding (10), the longitudinal extension of the second core (2) being smaller than the entire length of the optical waveguide (12) and at least one Bragg grating (231a, 231b, 232) being introduced into the second core (2).

2. Sensor according to claim 1, **characterized in that** the longitudinal extension of the second core (2) has:
at least one first longitudinal section (21) configured to allow optical coupling between the second core (2) and the first core (11);
at least one third longitudinal section (23), which is guided in the cladding (10) at a distance from the first core (11); and
at least one second longitudinal section (22), which connects the first longitudinal section (21) and the third longitudinal section (23).

3. Sensor according to claim 2, comprising a plurality of second cores (2) each having a third longitudinal section (23) arranged at at least two different distances (a, A) from the first core (11).

4. Sensor according to any of claims 1 to 3, **characterized in that** the first core (11) is configured to generate light of a second bandwidth when excited with laser radiation of a first bandwidth, the second bandwidth being larger than the first bandwidth, and/or
**in that** the first core (11) contains a dopant and/or **in that** the first core (10) contains erbium and/or ytterbium.

5. Sensor according to any of claims 2 to 4, **characterized in that** the first longitudinal section (21) of the second core (11) geometrically overlaps a part (112) of the first core (11), and/or
**in that** the first longitudinal section (21) of the second core (11) has a distance (e) of less than about 3 µm or less than about 2.5 µm or less than about 2.0 µm from the first core (11).

6. Sensor according to any of claims 1 to 5, **characterized in that** at least one Bragg grating (111) is arranged in the first core (11).

7. Sensor according to any of claims 2 to 6, **characterized in that** the third longitudinal section (23) of at least one second core (2) has a distance of less than about 10 µm or less than about 5 µm or less than about 3 µm or less than about 2 µm or less than about 1 µm from the lateral surface (13) of the optical waveguide (12).

8. Sensor according to claim 7, **characterized in that** at least two Bragg gratings (231, 232) are introduced into the third longitudinal section (23).

9. Sensor according to any of claims 7 or 8, **characterized in that** a partial surface (131) of the lateral surface (13) of the optical waveguide (12) is functionalized.

10. Sensor according to any of claims 1 to 9, **characterized in that** the angle included in the radial direction between two adjacent second cores (2) is between about 90° and about 180°, or
**in that** the angle included in the radial direction between two adjacent second cores (2) is between about 90° and about 120°, or
**in that** the angle included in the radial direction between two adjacent second cores (2) is between about 110° and about 130°.

11. Sensor according to any of claims 1 to 10, **characterized in that** the cladding (10) has an approximately rectangular cross-section.

12. Sensor according to any of claims 1 to 11, further comprising an evaluation circuit (3), which is configured to determine the shape of the sensor, and/or an evaluation circuit (3), which is configured to determine the concentration of predeterminable molecules on at least one partial surface (131) of the cladding (10) of the sensor (1), and/or an evaluation circuit (3) which is configured to navigate a tool containing the sensor (1) by comparing the actual shape of the sensor with stored map data.

13. Use of a sensor (1) according to any of claims 1 to 11 for determining a shape of a tool in space and/or for chemical analysis and/or for navigation of the tool.

## Revendications

1. Capteur à fibre optique (1) comportant un guide d'ondes optiques (12) qui présente au moins un premier noyau (11) et une gaine (10) entourant le premier noyau (11), le premier noyau (11) s'étendant essentiellement sur toute la longueur du guide d'ondes optiques (12),
**caractérisé en ce que**
le capteur (1) présente au moins un deuxième noyau (2) qui est entouré au moins partiellement par la gaine (10), l'extension longitudinale du deuxième noyau (2) étant plus petite que la longueur totale du guide d'ondes optiques (12) et au moins un réseau de Bragg (231a, 231b, 232) étant réalisé dans le deuxième noyau (2).

2. Capteur selon la revendication 1, **caractérisé en ce que** l'extension longitudinale du deuxième noyau (2) présente :
au moins une première section longitudinale (21) qui est conçue pour permettre un couplage optique entre le deuxième noyau (2) et le premier noyau (11) ;
au moins une troisième section longitudinale (23) qui est guidée dans la gaine (10) à distance du premier noyau (11) ; et
au moins une deuxième section longitudinale (22) qui relie la première section longitudinale (21) et la troisième section longitudinale (23).

3. Capteur selon la revendication 2, présentant une pluralité de deuxièmes noyaux (2) qui présentent chacun une troisième section longitudinale (23), lesquelles sont disposées à au moins deux distances différentes (a, A) du premier noyau (11).

4. Capteur selon l'une des revendications 1 à 3, **caractérisé en ce que** le premier noyau (11) est conçu pour produire une lumière d'une deuxième largeur de bande lorsqu'il est excité par un rayonnement laser d'une première largeur de bande, la deuxième largeur de bande étant plus grande que la première largeur de bande et/ou
**que** le premier noyau (11) contient un dopant et/ou que le premier noyau (10) contient de l'erbium et/ou de l'ytterbium.

5. Capteur selon l'une des revendications 2 à 4, **caractérisé en ce que** la première section longitudinale (21) du deuxième noyau (11) chevauche géométriquement une partie (112) du premier noyau (11) et/ou
**que** la première section longitudinale (21) du deuxième noyau (11) présente une distance (e) inférieure à environ 3 µm ou inférieure à environ 2,5 µm ou inférieure à environ 2,0 µm par rapport au premier noyau (11).

6. Capteur selon l'une des revendications 1 à 5, **caractérisé en ce qu'**au moins un réseau de Bragg (111) est disposé dans le premier noyau (11).

7. Capteur selon l'une des revendications 2 à 6, **caractérisé en ce que** la troisième section longitudinale (23) d'au moins un deuxième noyau (2) présente une distance inférieure à environ 10 µm ou inférieure à environ 5 µm ou inférieure à environ 3 µm ou inférieure à environ 2 µm ou inférieure à environ 1 µm par rapport à la surface de gaine (13) du guide d'ondes optiques (12).

8. Capteur selon la revendication 7, **caractérisé en ce qu'**au moins deux réseaux de Bragg (231, 232) sont réalisés dans la troisième section longitudinale (23).

9. Capteur selon l'une des revendications 7 ou 8, **caractérisé en ce qu'**une surface partielle (131) de la surface de gaine (13) du guide d'ondes optiques (12) est fonctionnalisée.

10. Capteur selon l'une des revendications 1 à 9, **caractérisé en ce que** l'angle compris dans la direction radiale entre deux deuxièmes noyaux (2) adjacents est compris entre environ 90° et environ 180°, ou que l'angle compris dans la direction radiale entre deux deuxièmes noyaux (2) adjacents est compris entre environ 90° et environ 120°, ou que l'angle compris dans la direction radiale entre deux deuxièmes noyaux (2) adjacents est compris entre environ 110° et environ 130°.

11. Capteur selon l'une des revendications 1 à 10, **caractérisé en ce que** la gaine (10) présente une section transversale à peu près rectangulaire.

12. Capteur selon l'une des revendications 1 à 11, contenant en outre un circuit d'évaluation (3) qui est conçu pour déterminer la forme du capteur et/ou un circuit d'évaluation (3) qui est conçu pour déterminer la concentration de molécules prédéfinissables sur au moins une surface partielle (131) de la gaine (10) du capteur (1) et/ou un circuit d'évaluation (3) qui est conçu pour faire naviguer un outil contenant le capteur (1) par comparaison de la forme réelle du capteur avec des données cartographiques enregistrées.

13. Utilisation d'un capteur (1) selon l'une des revendications 1 à 11 pour déterminer la forme d'un outil dans l'espace et/ou pour des analyses chimiques et/ou pour la navigation de l'outil.
